# EUROPÄISCHE PATENTSCHRIFT

(11) **EP 2 470 820 B1**
(45) Veröffentlichungstag und Bekanntmachung des Hinweises auf die Patenterteilung: **06.11.2013**
(21) Anmeldenummer: 10739627.7
(22) Anmeldetag: 04.08.2010
(51) Int. Cl.: F16M 11/04, G03B 17/56

(54) **SCHNELLSPANNEINRICHTUNG FÜR OPTISCHE GERÄTE**
QUICK CLAMPING APPARATUS FOR OPTICAL DEVICES
DISPOSITIF DE SERRAGE RAPIDE POUR APPAREILS OPTIQUES

(30) Priorität: 25.08.2009 DE 102009038823
(43) Veröffentlichungstag der Anmeldung: 04.07.2012
(73) Patentinhaber: Vogt, Philippe, 70190 Bussieres (FR)
(72) Erfinder: Vogt, Philippe, 70190 Bussieres (FR)
(74) Vertreter: Moser & Götze
(86) Internationale Anmeldenummer: PCT/EP2010/061356
(87) Internationale Veröffentlichungsnummer: WO 2011/023511

(56) Entgegenhaltungen:
- EP-A1- 1 160 499
- WO-A1-2008/028351
- DE-U1- 29 613 027
- US-A- 2 840 334
- US-A- 3 737 130
- US-B1- 6 773 172

## Beschreibung

Die Erfindung betrifft eine Schnellspanneinrichtung zum Einspannen einer Schnellwechselplatte eines optischen Gerätes in eine Führung an einer Grundplatte, wobei die Schnellwechselplatte und die Führung komplementär ausgebildete Führungsflächen aufweisen, die Führung relativ zu einander verstellbare Halteelemente aufweist und eine Einrichtung zum Feststellen der Schnellwechselplatte vorhanden ist, die ausgebildet ist, um den Abstand der Haltelemente zueinander zu verstellen.

Vorrichtungen zum Feststellen eines optischen Gerätes, auch Schnellspanneinrichtungen genannt, dienen insbesondere dazu, Spiegelreflexkameras über Adapter- oder Schnellwechselplatten an einem Stativkopf (Grundplatte) zu fixieren, wobei dies derart vollzogen wird, dass die Adapterplatte an der Kamera angeschraubt und die Adapterplatte an einer Führung an der Grundplatte am Stativkopf lösbar fixiert wird. Dazu wird üblicherweise die Adapterplatte in der Führung eingeklemmt, wozu die gegenüberliegenden Seiten der Führung relativ zu einander beweglich ausgeführt sind. Der Klemmvorgang wird über eine Schraube oder einen Hebel durchgeführt, die entsprechend den Abstand der Teile der Führung zum Fixieren verringern bzw. zum Lösen vergrößern.

Mit diesen Vorrichtungen ist es möglich zwischen unterschiedlichen Kameras, die jeweils eine entsprechende Adapterplatte aufweisen, schnell zu wechseln. Besonders im Bereich der professionellen Photographie ist dies von Interesse.

So ist aus der EP 0 982 613 A1 z.B. eine entsprechende Vorrichtung zum Feststellen eines optischen Gerätes mit einer Führungsschiene an einem Tragteil, mit einem ersten Organ, welches mit dem Tragteil verbunden ist und einem zweiten Organ, das relativ zum ersten Organ verstellbar ist und mit einer Einrichtung zum Feststellen der Führungsschiene, die mit dem ersten Organ verbunden ist und das zweite Organ durchdringt, bekannt. Die Einrichtung weist ferner ein Sperrglied und einen Hebel mit einer unter Federwirkung stehende Haltevorrichtung auf, der am Sperrglied schwenkbar gelagert ist und am zweiten Organ anliegt, derart, dass der Hebel in einer ersten Stellung das optische Gerät festlegt, in einer zweiten Stellung das optische Gerät zum Verschieben freigibt und in einer dritten Stellung das optische Gerät zur Abnahme freigibt.

Auch aus der EP 1 893 906 B1 ist eine Schnellmontagevorrichtung für Video- und Fotoausrüstungen bekannt, umfassend ein erstes Befestigungselement in der Form einer Platte, die an der Ausrüstung befestigt werden kann, und ein zweites Befestigungselement mit einer Aufnahme für die Platte, die an einem Stützkopf für die Ausrüstung befestigt werden kann, wobei das zweite Element eine Einrichtung zum Halten der Platte in der Aufnahme umfasst, welche mit einer Kante der Platte in Eingriff kommt, um sie in der Aufnahme zu halten, einen Nockenpresser, der in der Aufnahme gegenüber der Halteeinrichtung angeordnet ist, um die Kante der Platte gegen die Halteeinrichtung zu pressen, und eine Sicherheitsvorrichtung, um ein unbeabsichtigtes Lösen des Pressers zu verhindern. Die Sicherheitsvorrichtung umfasst ferner einen federbelasteten Arm, der sich in der Aufnahme relativ zu der Ebene der Aufnahme neigen kann und einen Anschlagzahn aufweist, der auf den Presser wirkt, wobei der Zahn eine Auflauffläche mit einer geneigten Ebene in dem Teil, der der Aufnahme zugewandt ist, und eine Anschlagschulter auf dem gegenüberliegenden Teil umfasst, wobei der Presser einen Fortsatz umfasst, der den Zahn überfahren kann, der sich von einer Position gegen die Auflauffläche zu einer Position gegen die Schulter bewegt, beim Übergang von einer Position, in der die Platte gelost ist, in der sie von der Aufnahme entfernt werden kann, zu einer verriegelten Position, in der die Platte in der Aufnahme verriegelt ist.

Der Mechanismus zum Verstellen und Fixieren des Abstands der relativ zu einander beweglichen Teile der Führungsschiene bzw. der Aufnahme und des Pressers ist in beiden der obigen Versionen aufwendig ausgestaltet.

Aus der US 2005/0041966 A1 ist eine Einrichtung zum Feststellen einer Schnellwechselplatte bekannt, bei der die Schnellwechselplatte zwischen zwei Halteelementen eingespannt wird, wobei das eine Halteelement gegenüber dem zweiten Halteelement in Verschieberichtung beweglich ausgestaltet ist und federvorgespannt ist. Zum Verstellen wird dieses bewegliche Halteelement über einen Hebel mit einer Anlagenfläche gegen die Federspannung bewegt und artiert.

Aus der EP 1 365 187 A1 ist eine Vorrichtung zur Schnellfixierung einer an einem Gerät befestigten Anschlussplatte an einem Stativkopf bekannt, der an der Oberseite eine Nut aufweist, an die die Anschlussplatte mit einer Seite einsteckbar ist, und einen Klemmbacken aufweist, welche die gegenüberliegende Seite der Anschlussplatte in der Schließstellung begreift. Der Klemmbacken ist um eine zu Anschlussplattenebene kippbar, an einem Schieber befestigt, der durch Druck mit der Anschlussplatte entgegen einer Federkraft vorschiebbar und durch einen in die Eingangsstellung federbelasteten Riegel in der Schließstellung verriegelbar ist.

Aus der US 5,737,657 A ist ebenfalls eine Schnellspanneinrichtung bekannt, mit der eine Schnellwechselplatte mit Hilfe eines Hebels seitlich festgehalten wird. Der Hebel drückt dabei mit seinem ungleichmäßig zu seinem Drehpunkt ausgestalteten Außenumfang gegen den verstellbaren Halteblock.

US 6773172, WO 2008/028351 und DE 3800763 C1 sind Beispiele bekannter Schnellspanneinrichtungen.

Es besteht daher der Wunsch nach einer Schnellspanneinrichtung für optische Geräte, die einfacher aufgebaut und somit zuverlässiger sowie kostengünstiger herstellbar ist.

Diese Aufgabe wird durch die in Anspruch 1 wiedergegebene Schnellspanneinrichtung gelöst.

Dadurch, dass die Einrichtung zum Feststellen der Schnellwechselplatte einen Hebel umfasst, der mit einer Nocke in eine Kulisse eingreift, die in dem ersten Halteelement derart angeordnet ist, dass eine Bewegung des Hebels das erste Halteelement relativ zu dem zweiten Halteelement verstellt, ist die Schnellspanneinrichtung einerseits mechanisch einfach aufgebaut und andererseits einfach und zuverlässig in der Handhabung.

- Die Schnellspanneinrichtung gemäß Anspruch 1 kennt drei Einstellungen bzw. Positionen, nämlich eine erste Stellung, in der der Hebel das optische Gerät bzw. die Schnellwechselplatte festlegt, eine zweite Stellung, in der er das optische Gerät bzw. die Schnellwechselplatte zum Verschieben in der Führung freigibt und eine dritte Stellung, in der er das optische Gerät bzw. die Schnellwechselplatte zur Abnahme freigibt.

Um die jeweiligen Positionen für den Benutzer "kenntlich" zu machen bzw. beizubehalten, kann die Kulisse mit einer in Längsrichtung etwa mittig angeordneten Aussparung versehen sein, um die Nocke in der Verschiebeposition aufzunehmen.

Vorzugsweise ist das zweite Halteelement von der Führung und deren Führungsfläche gebildet, die sich auf einer Seite der Grundplatte erheben. Sie bilden also einen Teil der Grundplatte aus. Sinnvollerweise ist das zweite Halteelement daher stationär ausgebildet.

Als Führungsfläche weist das zweite Halteelement einen Hinterschnitt auf. Auch das erste Halteelement weist bevorzugterweise einen Hinterschnitt auf. Somit können sie zusammen eine schwalbenschwanzförmige Führungsfläche ausbilden, um ein entsprechendes Gegenstück in Gestalt der Schnellwechselplatte aufzunehmen.

Das erste Halteelement ist dagegen beweglich ausgeführt, um den Abstand zum zweiten Haltelement zu verändern. Dazu ist es bevorzugt, wenn das erste Haltelement einen in Verstellrichtung beweglichen Block umfasst, der mit einer Führungsfläche an einer Längsseite ausgebildet ist. Dieser Block ist insbesondere aus Kunststoff gebildet und verändert also den Abstand der zwei Führungsflächen der Halteelemente zu einander.

Sinnvollerweise ist der Block in Verstellbewegung federbeaufschlagt, d.h. er wird von einer Feder in Verstellrichtung gedrückt, insbesondere in Richtung des gegenüberliegenden zweiten Halteelements.

Der Block ist in der bevorzugten Ausführungsform in einer Führung beweglich aufgenommen. Die Führung kann dabei von einer Abdeckung, seitlichen Erhebungen und einer Vertiefung in der Grundplatte ausgebildet sein. Insbesondere ergibt sich bei gegenüberliegender Anordnung im Vergleich zum zweiten Halteelement eine Art symmetrische Anordnung der Haltelemente.

Die seitlichen Erhebungen und die Vertiefung sind wiederum vorzugsweise Teile der Grundplatte und die Abdeckung schließt die Führung nach oben ab. Die Abdeckung kann z.B. aus Metall, insbesondere Aluminium, oder Kunststoff bestehen wohingegen die Grundplatte üblicherweise aus Metall gefertigt wird. Natürlich können auch Teile der Erhebungen an der Abdeckung angeschlossen sein bzw. von dieser ausgebildet werden.

Wenn die Abdeckung flexibel ausgestaltet ist und ggf. die Nocke aus einem elastischen Material, vorzugsweise einem elastischen Metall hergestellt ist, ergibt sich, trotz Einhaltung enger Toleranzen und der Auspaarungen (siehe oben) in der Kulisse, eine weiche ruckfreie Bewegung, da das notwendige Ausweichen der Nocke für die Stellungsänderung durch die flexible Abdeckung und ihre eigene Elastizität erreicht wird.

In der bevorzugten Ausführungsform ist der Hebel ein zweiarmiger Winkelhebel. Der Hebel weist bevorzugt einen Drehpunkt an der Verbindungstelle der zwei Hebelarme auf. Zusätzlich kann der Hebel einen kürzeren und einen längeren Arm aufweisen sowie
L-förmig ausgebildet sein.

Am sinnvollsten ist es, wenn die Nocke am Ende des kürzen Arms angeordnet ist.

Wenn die Grundplatte der Schnellspanneinrichtung jeweils an jedem Ende der Führung mit Noppen versehen ist, kann ein unbeabsichtigtes Herausschieben der Schnellwechselplatte aus der Führung verhindert werden.

Dazu ist es sinnvoll, wenn die Schnellwechselplatte einer der Grundplatte zugewandte Nut an Ihrer Unterseite aufweist, in der die Noppen aufgenommen werden bzw. so dass die Platte über die Noppen hinweg geschoben werden kann. Zusätzlich sollte die Schnellwechselplatte ein Herausschiebe-Verhinderungselement aufweisen, um ein vollständiges Herausschieben zu verhindern. Dieses ist sinnvollerweise von der üblicher Weise vorhandenen Befestigungsschraube gebildet, mit der die Schnellwechselplatte an dem optischen Gerät befestigt wird.

Weitere Vorteile der Erfindung ergeben sich aus der nachfolgenden Beschreibung eines Ausführungsbeispiels anhand der einzigen Zeichnung, in der
Fig. 1 eine perspektivische Ansicht eines Stativkopfes mit einer Schnellspanneinrichtung gemäß der Erfindung;
Fig. 2 eine Draufsicht auf die Schnellspanneinrichtung aus Fig. 1 in der Festlegestellung mit entfernter Abdeckung;
Fig. 3 eine Draufsicht auf die Schnellspanneinrichtung aus Fig. 1 in der Verschiebestellung mit entfernter Abdeckung und
Fig. 4 eine Draufsicht auf die Schnellspanneinrichtung aus Fig. 1 in der Freigabestellung mit entfernter Abdeckung.

In den Figuren ist ein Stativkopf 1 gezeigt, der mit einer Schnellspanneinrichtung 2 zum Einspannen einer Schnellwechselplatte (nicht gezeigt) eines optischen Gerätes in eine Führung 3 an einer Grundplatte 4 ausgestaltet ist.

Die Grundplatte 4 weist in der Draufsicht eine Kreisform auf. Auf gegenüberliegenden Seiten erheben sich blockförmig jeweils Halteelemente 5, 6 zwischen denen etwa mittig die Führung 3 angeordnet ist.

Beide Halteelemente 5, 6 weisen als Führungsflächen 3a, 3b sich entsprechende Hinterschnitte auf, die gemeinsam eine etwa schwalbenschwanzförmige Führungsfläche ausbilden. Dabei weisen die Führung 3 und die Schnellwechselplatte komplementär ausgebildete Führungsflächen 3a, 3b auf.

Die Halteelemente 5, 6 sind relativ zu einander verstellbar und weisen eine Einrichtung 7 zum Feststellen der Schnellwechselplatte auf. Die Einrichtung 7 zum Feststellen der Schnellwechselplatte ist in dem einen Halteelement 5 ausgebildet, um den Abstand der Haltelemente 5, 6 bzw. deren Führungsflächen 3a, 3b relativ zueinander zu verstellen.

Das zweite Halteelement 6 ist dagegen starr bzw. stationär ausgebildet.

Die Einrichtung zum Feststellen 7 der Schnellwechselplatte umfasst dazu einen Hebel 8, der mit einer Nocke 9 in eine längliche Kulisse 10 eines beweglichen Blocks 11 eingreift. Die Kulisse 10 ist dabei in dem Block 11 des ersten Halteelements 5 derart angeordnet, dass eine Bewegung des Hebels 8 um einen Drehpunkt 12 das erste Halteelement 5 bzw. den Block 11 relativ zu dem zweiten Halteelement 6 verstellt, also seinen Abstand zu diesem verändert.

Der in Verstellrichtung V bewegliche Block 11 bildet die Führungsfläche 3a an seiner nach innen gerichteten Längsseite aus. Die Führungsfläche 3b des zweiten Halteelements wird dagegen einfach von der starren Wand ausgebildet.

Der bewegliche Block 11 ist in einer Führung 15 beweglich aufgenommen, die von einer Abdeckung 16, seitlichen Erhebungen 17 und einer Vertiefung 18 in der Grundplatte 4 ausgebildet ist. Die Abdeckung ist aus flexiblem Kunststoff ausgebildet.

Der Hebel 8 ist ein zweiarmiger Winkelhebel, der einen Drehpunkt 12 an der Verbindungstelle der zwei Hebelarme aufweist. Der Hebel weist dabei einen kürzeren und einen längeren Arm auf, ist also etwa L-förmig ausgestaltet. Die Nocke ist am Ende des kürzen Arms angeordnet und der längere Arm ist der Betätigungsarm.

Die Nocke ist ebenfalls aus einem elastischen Material, vorzugsweise einem elastischen Metall hergestellt.

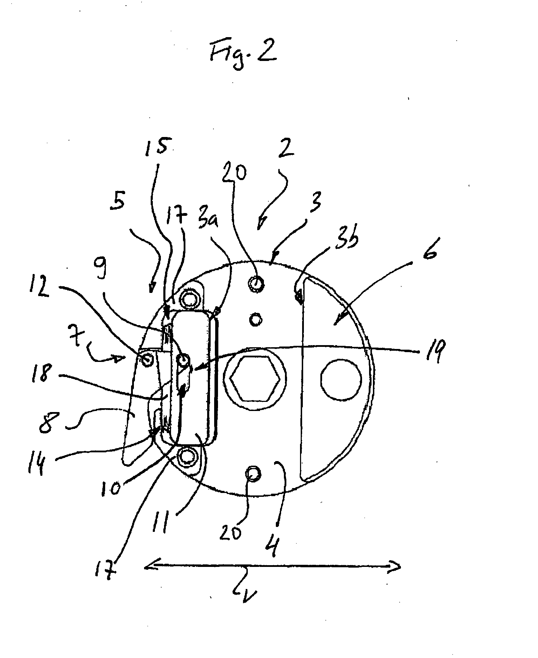

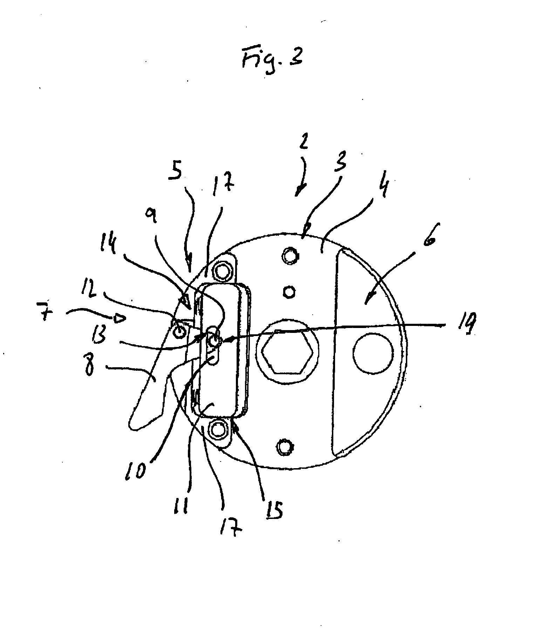

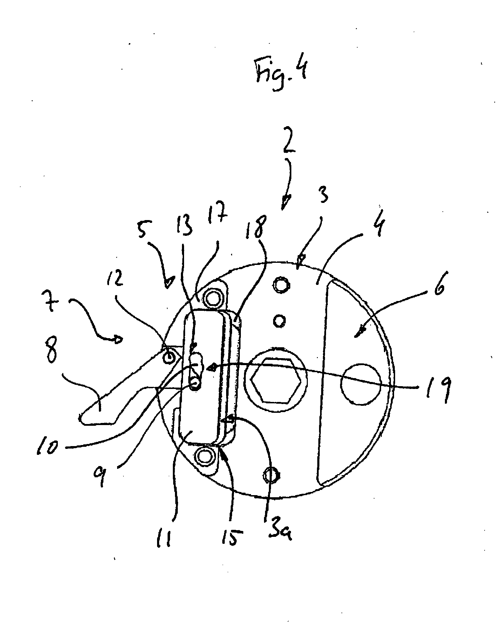

Der Hebel 8 weist eine erste Stellung auf (vgl. Figur 2), in der das optische Gerät bzw. die Schnellwechselplatte festlegt ist, eine zweite Stellung (vgl. Figur 3), in der das optische Gerät bzw. die Schnellwechselplatte zum Verschieben in der Führung freigeben ist, und eine dritte Stellung (vgl. Figur 4), in der das optische Gerät bzw. die Schnellwechselplatte zur Abnahme freigegeben ist.

Die quer zur Verstellrichtung V länglich ausgebildete Kulisse 10 ist mit einer Aussparung 13 bzw. Verbreiterung an einem Ende versehen, um die Nocke 9 in der Festlegposition (Figur 2) aufzunehmen und den Block 11 dort zu arretieren. Dazu weist die Einrichtung zum Feststellen 7 der Schnellwechselplatte die Feder 14 auf, die den Block 11 in Richtung des zweiten Halteelements 6 drängt, so dass die Nocke 9 beim Einnehmen der Festlegposition in die nach außen ausgerichtete Aussparung rutscht und dort verbleibt.

Die Kulisse ist ferner mit einer in Längsrichtung etwa mittig angeordneten weiteren, zur Führung 3 hin ausgerichteten Aussparung 19 bzw. Verbreiterung versehen, um die Nocke 9 in der Verschiebeposition aufzunehmen bzw. zu arretieren.

Die Elastizität der Nocke 9 und der Abdeckung 16 erlaubt es, dass trotz Einhaltung enger Toleranzen und der Auspaarungen 13 bzw. 19 in der Kulisse 10, eine weiche ruckfreie Bewegung erreicht wird, da das notwendige Ausweichen der Nocke für die Stellungsänderung aus der jeweiligen Aussparung durch die flexible Abdeckung und ihre eigene Elastizität erlaubt wird.

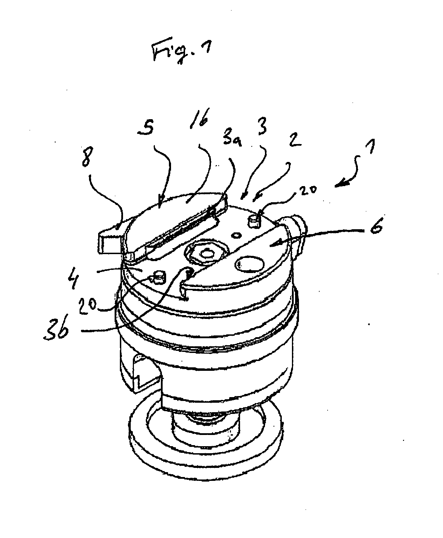

In den Figuren erkennt man auch die Noppen 20 im Endbereich der Führung 3 der Grundplatte 4, die ein Verschieben der Schnellwechselplatte über die Noppen 20 hinweg in der Führung 3 erlauben, aber Herausschieben der Schnellwechselplatte in Verbindung mit der Befestigungsschraube verhindern. Die Befestigungsschraube dient wie üblich zur Befestigung der Schnellwechselplatte an einem optischen Gerät, wie z.B. aus der EP 0 982 613 A1 in Figur 1 ersichtlich. Im Gegensatz dazu weist hier die Schnellwechselplatte nach eine zentrale Nut auf der der Grundplatte zugewandten Seite auf, so dass die Schnellwechselplatte zwar über die Noppen 20 geschoben werden kann, aber dabei nicht die Führung verlassen kann, da die Befestigungsschraube als Herausschiebe-Verhinderungselement wirkt.

### Bezugszeichenliste

- 1: Stativkopf
- 2: Schnellspanneinrichtung
- 3: Führung
- 3a, b: Führungsfläche
- 4: Grundplatte
- 5, 6: Halteelement
- 7: Einrichtung zum Feststellen
- 8: Hebel
- 9: Nocke
- 10: Kulisse
- 11: beweglicher Block
- 12: Drehpunkt
- 13: Aussparung
- 14: Feder
- 15: Führung
- 16: Abdeckung
- 17: seitliche Erhebung
- 18: Vertiefung
- 19: Aussparung
- 20: Noppe
- V: Verstellrichtung

## Patentansprüche

1. Schnellwechselplatten-Schnellspanneinrichtung (1) mit einer Führung (3) an einer Grundplatte (4) zum Einspannen einer Schnellwechselplatte eines optischen Gerätes in die Führung (3), wobei die Schnellwechselplatte und die Führung (3) komplementär ausgebildete Führungsflächen (3a, b) aufweisen, die Führung (3) relativ zu einander verstellbare erste und zweite Halteelemente (5,6) aufweist, und eine Einrichtung (7) zum Feststellen der Schnellwechselplatte vorhanden ist, die ausgebildet ist, um den Abstand der Haltelemente (5, 6) zueinander zu verstellen, wobei die Einrichtung (7) zum Feststellen der Schnellwech-selplatte einen Hebel (8) umfasst, wobei der Hebel in einer ersten Stellung das optische Gerät festlegt, in einer zweiten Stellung das optische Gerät zum Verschieben in der Führung freigibt und in einer dritten Stellung das optische Gerät zur Abnahme freigibt, **dadurch gekennzeichnet, dass** der Hebel mit einer Nocke (9) eine Kulisse (10) eingreift, die in dem ersten Halteelement (5) derart angeordnet ist, dass eine Bewegung des Hebels (8) das erste Halteelement (5) relativ zu dem zweiten Halteelement (6) verstellt, und wobei die Kulisse (10) mit einer Aussparung (13) an einem Ende versehen ist, um die Nocke (9) in der Festlegposition aufzunehmen.

2. Schnellspanneinrichtung nach Anspruch 1, **dadurch gekennzeichnet, dass** das zweite Halteelement (6) von der Führung (3) und deren Führungsfläche (3b) gebildet ist, die sich auf einer Seite der Grundplatte (4) erheben.

3. Schnellspanneinrichtung nach Anspruch 1 oder 2, **dadurch gekennzeichnet, dass** das zweite Halteelement (6) einen Hinterschnitt aufweist.

4. Schnellspanneinrichtung nach einem der vorhergehenden Ansprüche, **dadurch gekennzeichnet, dass** das zweite Halteelement (6) stationär ausgebildet ist.

5. Schnellspanneinrichtung nach einem der vorhergehenden Ansprüche, **dadurch gekennzeichnet, dass** das erste Haltelement (5) einen in Verstellrichtung (V) beweglichen Block (11) umfasst, der mit einer Führungsfläche (3a) an einer Längsseite ausgebildet ist.

6. Schnellspanneinrichtung nach einem der vorhergehenden Ansprüche, **dadurch gekennzeichnet, dass** das erste Halteelement (5) einen Hinterschnitt aufweist.

7. Schnellspanneinrichtung nach einem der vorhergehenden Ansprüche, **dadurch gekennzeichnet, dass** das zweite Halteelement (6) zusammen mit dem ersten Halteelement (5) eine schwalbenschwanzförmige Führungsfläche (3a, b) ausbildet.

8. Schnellspanneinrichtung nach einem der Ansprüche 5 bis 7, **dadurch gekennzeichnet, dass** der Block (11) in Verstellrichtung (V) federbeaufschlagt ist.

9. Schnellspanneinrichtung nach einem der Ansprüche 5 bis 8, **dadurch gekennzeichnet, dass** der Block (11) in einer Führung (15) beweglich aufgenommen ist.

10. Schnellspanneinrichtung nach Anspruch 9, **dadurch gekennzeichnet, dass** die Führung (15) des beweglichen Blocks (11) von einer Abdeckung (16), seitlichen Erhebungen (17) und einer Vertiefung (18) in der Grundplatte (4) ausgebildet ist.

11. Schnellspanneinrichtung nach Anspruch 10, **dadurch gekennzeichnet, dass** die Abdeckung (16) flexibel ist.

12. Schnellspanneinrichtung nach einem der vorhergehenden Ansprüche, **dadurch gekennzeichnet, dass** der Hebel (8) ein zweiarmiger Winkelhebel ist.

13. Schnellspanneinrichtung nach einem der vorhergehenden Ansprüche, **dadurch gekennzeichnet, dass** die Nocke (9) aus einem elastischen Material hergestellt ist.

14. Schnellspanneinrichtung nach Anspruch 1, **dadurch gekennzeichnet, dass** die Kulisse (10) mit einer in Längsrichtung etwa mittig angeordneten Aussparung (19) versehen ist, um die Nocke (9) in der Verschiebeposition aufzunehmen.

15. Anordnung einer Schnellspanneinrichtung nach einem der Ansprüche 1 bis 14 und einer Schnellwechselplatte für ein optisches Gerät, **dadurch gekennzeichnet, dass** die Grundplatte (4) der Schnellspanneinrichtung jeweils an jedem Ende der Führung mit Noppen (20) versehen ist.

## Claims

1. A quick release plate quick clamping device (1) with a guide (3) on a base plate (4) for clamping a quick release plate of an optical device in the guide (3), wherein the quick release plate and the guide (3) afford complementary guide surfaces (3a, 3b), the guide (3) has first and second retaining elements (5, 6), which are movable relative to one another, and a device (7) is present for fixing the quick release plate in position, which is constructed to adjust the spacing of the retaining elements (5, 6) from one another, wherein the device (7) for fixing the quick release plate in position includes a lever (8), wherein, in a first position, the lever fixes the optical device, in a second position releases the optical device for movement in the guide and in a third position releases the optical device for removal, **characterised in that** the lever engages with a cam (9) into a slot (10), which is arranged in the first retaining element (5) such that a movement of the lever (8) displaces the first retaining element (5) relative the second retaining element (6) and wherein the slot (10) is provided with a recess (13) at one end in order to accommodate the cam (9) in the fixed position.

2. A quick clamping device as claimed in claim 1, **characterised in that** the second retaining element (6) is constituted by the guide (3) and its guide surface (3b), which rise up on one side of the base plate (4).

3. A quick clamping device as claimed in claim 1 or 2, **characterised in that** the second retaining element (6) has an undercut.

4. A quick clamping device as claimed in one of the preceding claims, **characterised in that** the second retaining element (6) is stationary.

5. A quick clamping device as claimed in one of the preceding claims, **characterised in that** the first retaining element (5) includes a block (11), which is movable in the displacement direction (V) and is constructed with a guide surface (3a) on one longitudinal side.

6. A quick clamping device as claimed in one of the preceding claims, **characterised in that** the first retaining element (5) has an undercut.

7. A quick clamping device as claimed in one of the preceding claims, **characterised in that** the second retaining element (6) together with the first retaining element (5) defines a swallow tail-shaped guide surface (3a, 3b).

8. A quick clamping device as claimed in one of claims 5 to 7, **characterised in that** the block (11) is acted on by a spring in displacement movement (V).

9. A quick clamping device as claimed in one of claims 5 to 8, **characterised in that** the block (11) is movably accommodated in a guide (15).

10. A quick clamping device as claimed in claim 9, **characterised in that** the guide (15) of the movable block (11) is constituted by a cover (16), lateral raised portions (17) and a recess (18) in the base plate (4).

11. A quick clamping device as claimed in claim 10, **characterised in that** the cover (16) is flexible.

12. A quick clamping device as claimed in one of the preceding claims, **characterised in that** the lever (8) is a two-arm crank lever.

13. A quick clamping device as claimed in one of the preceding claims, **characterised in that** the cam (9) is made of an elastic material.

14. A quick clamping device as claimed in claim 1, **characterised in that** the slot (10) is provided with a recess (19), which is approximately centrally disposed in the longitudinal direction, in order to accommodate the cam (9) in the displacement position.

15. An assembly of a quick clamping device as claimed in one of claims 1 to 14 and a quick release plate for an optical device, **characterised in that** the base plate (4) of the quick clamping device is provided at each end of the guide with respective protuberances (20).

## Revendications

1. Dispositif de serrage rapide de plaque à changement rapide (1), ledit dispositif comportant un guide (3) au niveau d'une plaque de base (4) pour insérer dans le guide (3) une plaque à changement rapide d'un appareil optique, la plaque à changement rapide et le guide (3) comportant des faces de guidage (3a, b) de conformations complémentaires, le guide (3) comportant des premier et deuxième éléments de retenue (5, 6) réglables l'un par rapport à l'autre, et un dispositif (7) d'immobilisation de la plaque à changement rapide étant présent qui est conformé pour régler la distance entre les éléments de retenue (5, 6), le dispositif (7) d'immobilisation de la plaque à changement rapide comportant un levier (8), le levier immobilisant dans une première position l'appareil optique, libérant dans une deuxième position l'appareil optique pour le faire coulisser dans le guide et libérant dans une troisième position l'appareil optique pour le démonter, **caractérisé en ce que** le levier s'engage au moyen d'un ergot (9) dans une coulisse (10) qui est ménagée dans le premier élément de retenue (5) de telle sorte qu'un déplacement du levier (8) règle le premier élément de retenue (5) par rapport au deuxième élément de retenue (6), la coulisse (10) étant dotée à une extrémité d'un évidement (13) destiné à recevoir l'ergot (9) dans la position d'immobilisation.

2. Dispositif de serrage rapide selon la revendication 1, **caractérisé en ce que** le deuxième élément de retenue (6) est formé par le guide (3) et sa face de guidage (3b) qui se dressent sur un côté de la plaque de base (4).

3. Dispositif de serrage rapide selon la revendication 1 ou 2, **caractérisé en ce que** le deuxième élément de retenue (6) comporte une contre-dépouille.

4. Dispositif de serrage rapide selon l'une des revendications précédentes, **caractérisé en ce que** le deuxième élément de retenue (6) est conformé pour être immobile.

5. Dispositif de serrage rapide selon l'une des revendications précédentes, **caractérisé en ce que** le premier élément de retenue (5) comporte un bloc (11), mobile dans une direction de réglage (V), qui est conformé avec une face de guidage (3a) sur un côté longitudinal.

6. Dispositif de serrage rapide selon l'une des revendications précédentes, **caractérisé en ce que** le premier élément de retenue (5) comporte une contre-dépouille.

7. Dispositif de serrage rapide selon l'une des revendications précédentes, **caractérisé en ce que** le deuxième élément de retenue (6) forme conjointement avec le premier élément de retenue (5) une face de guidage (3a, b) en forme de queue d'aronde.

8. Dispositif de serrage rapide selon l'une des revendications 5 à 7, **caractérisé en ce que** le bloc (11) est sollicité par ressort dans la direction de réglage (V).

9. Dispositif de serrage rapide selon l'une des revendications 5 à 8, **caractérisé en ce que** le bloc (11) est reçu de façon mobile dans un guide (15).

10. Dispositif de serrage rapide selon la revendication 9, **caractérisé en ce que** le guide (15) du bloc mobile (11) est formé par un capot (16), des saillies latérales (17) et un évidement (18) ménagé dans la plaque de base (4).

11. Dispositif de serrage rapide selon la revendication 10, **caractérisé en ce que** le capot (16) est souple.

12. Dispositif de serrage rapide selon l'une des revendications précédentes, **caractérisé en ce que** le levier (8) est un levier coudé à deux bras.

13. Dispositif de serrage rapide selon l'une des revendications précédentes, **caractérisé en ce que** l'ergot (9) est fabriqué à partir d'une matière élastique.

14. Dispositif de serrage rapide selon la revendication 1, **caractérisé en ce que** la coulisse (10) est dotée d'un évidement (19) ménagé à peu près au milieu dans la direction longitudinale et destiné à recevoir l'ergot (9) dans la position de coulissement.

15. Ensemble formé d'un dispositif de serrage rapide selon l'une des revendications 1 à 14 et d'une plaque à changement rapide pour appareil optique, **caractérisé en ce que** la plaque de base (4) du dispositif de serrage rapide est dotée de picots (20) à chaque extrémité du guidage.
